# EUROPEAN PATENT APPLICATION

(11) **EP 4 481 277 A1**
(43) Date of publication of application: **25.12.2024**
(21) Application number: 24175760.8
(22) Date of filing: 14.05.2024
(51) Int. Cl.: F24C 15/16, F24C 15/32, A47J 37/06

(54) **DOMESTIC OVEN WITH AIR FRYING ACCESSORY**

(30) Priority: 20.06.2023 TR 202307272
(71) Applicant: Renta Elektrikli Ev Aletleri Sanayi Ve, 34746 Istanbul (TR)
(72) Inventor: YILDIRAN, VASIF CAN, Istanbul 34746 (TR); GUCLU, YUSUF, Istanbul 34746 (TR); GUN, ELIF NUR, Istanbul 34746 (TR)
(74) Representative: Sevinç, Cenk

(57) **Abstract**

The invention relates to a domestic oven with an air frying accessory, which enables the electric oven to gain the function of an air-frying device, with a heater unit and apparatus placed in addition to the fan on the back panel of domestic electric ovens.

## Description

### Technical field of the invention

The invention relates to a domestic oven with an air frying accessory, which enables the electric oven to gain the function of an air-frying device, with a heater unit and apparatus placed in addition to the fan on the back panel of domestic electric ovens.

### State of the Art

Today, ovens in almost every home have become a part of human life. Ovens with a wide variety of models offer different cooking options for people. It is possible to divide the ovens in the market into two groups, gas and electric, according to their energy sources, but electric ovens are more prominent in terms of sales volume. Electric ovens are basically marketed with a turbo fan that circulates the flow inside the oven and different combinations of resistance components that produce the heat that enables cooking. Oven models can be sold without fans, that is, static, and there are also models sold with only the upper resistance. This is all about customer preference and product ranges. In a fully functional oven, there is a turbo fan positioned inside the turbo resistance along with the bottom, top and turbo resistances. In recent years, microwave, full and semi-steam oven models can also be seen frequently on the market.

With the efforts made for better cooking, the best-selling cooker of recent years has become the air fryer. Although airfryer is a simple cooking device, it offers efficient cooking. It is widely preferred due to its low fat and short cooking time. Airfryer simply consists of an optimum volume, a resistance positioned above the food, and a fan positioned in the centre of the upper resistance. Foods kept in a narrow volume are cooked faster compared to cooking in a normal oven by means of the fan resistance and airfyer volume design. The air heated by the resistance is passed over the food with the help of a fan and reaches the heater again. The grill structure on which the food is placed and the design of the spaces within the volume allow this.

Ovens, found in almost every home today, are the most common appliances used for cooking. However, oven volumes are produced according to certain standards and people generally prefer large-volume ovens. The main reason for this choice is the oven's ability to cook large amounts of food. However, ovens are generally used with single tray cooking. When examined in this context, oven volumes are too large for a single tray. A large oven volume causes longer cooking times and therefore energy consumption. For this reason, people now buy airfryers in addition to the oven in their homes. However, purchasing an airfyer means additional costs. In addition, purchasing only an airfryer will not allow for large-scale cooking. Currently, customers have to buy two devices together.

While there are many separate oven models and airfryer models on the market, the need for an integrated system has arisen. While the oven stands out with its large volume and tray features, there are often situations where the volume used during cooking is unnecessary. The large oven volume prevents both heat and flow from reaching the food. This situation causes unnecessary energy consumption. Not only as a choice of customers, but also with the tightening of regulations, the works on the oven production has given rise to ideas to produce ovens that can cook locally and save energy.

The invention that is the subject of the application numbered "CN104146623A" in the state of the art relates to an electric oven that has a fan inside the oven, a heating element placed in front of the fan, a cooking element to be used for air frying mode, and gains air frying function by circulating the air inside the cooking element when this element comes in front of the fan.

The invention that is the subject of the application numbered "US20190000267" in the state of the art relates to a toaster oven that, in addition to the features of a toaster oven, has an airfryer function with a rotating and perforated cooking apparatus and two heating elements located under the cooking apparatus.

The patent numbered "US20220163212" in the state of the art relates to an oven that can be used for both oven and air fryer functions, with heating elements and fans located separately in two compartments, separated from each other by a removable partition.

In the state of the art, there are ovens that can be used for both oven and airfryer functions. However, there is a need for an oven that has air frying apparatus, air direction channels and cooking compartment, and that can be used as a standard "home built-in oven" by completely removing the air frying apparatus from the home built-in oven.

As a result, due to the negativities described above and the inadequacy of existing solutions on the subject, it has become necessary to make a development in the relevant technical field.

### Brief Description and Aims of the Invention

The invention relates to a domestic oven with an air frying accessory, which enables the electric oven to gain the function of an air-frying device, with a heater unit and apparatus placed in addition to the fan on the back panel of domestic electric ovens.

The most important aim of the invention is to enable it to be used as a standard "domestic built-in oven" when the air frying apparatus is removed.

Another aim of the invention is to provide air outlet and openings in the oven and the apparatus. In this way, when the apparatus is placed in the oven, air exchange is ensured between the domestic built-in oven and the apparatus.

Another aim of the invention is that the turbo fan and fan resistance in the oven blow hot air into the apparatus when the apparatus is installed and provide hot air circulation within the cooking compartment like standard built-in ovens when the apparatus is not installed.

### Description of the drawings

**FIGURE-1** is the drawing showing the control panel, side racks and air frying apparatus of the oven that is the subject of the invention.
**FIGURE-2** is the drawing showing the air frying apparatus inside the oven that is the subject of the invention.
**FIGURE-3** is the drawing showing the fan cover, air outlet and side racks that are the subject of the invention.
**FIGURE-4** is the drawing showing the inner body, fan, fan resistance and fan cover of the apparatus that are the subject of the invention.
**FIGURE-5** is the drawing showing the flow of air heated by the fan resistance of the invention within the apparatus.
**FIGURE-6** is the drawing showing the side section view of the oven that is the subject of the invention where the apparatus is.
**FIGURE-7** is the drawing showing the upper section view of the oven that is the subject of the invention where the apparatus is.
**FIGURE-8** is the drawing showing the general perspective view of the air frying apparatus that is the subject of the invention.
**FIGURE-9** is the drawing showing the rear view of the air frying apparatus that is the subject of the invention.
**FIGURE-10** is the drawing giving a general perspective view of the inner body that is the subject of the invention.
**FIGURE-11** is the drawing showing the lower part of the inner body and the cooking basket that are the subject of the invention.
**FIGURE-12** is the drawing showing the inner body, basket and fan cover that are the subject of the invention.

### Reference numbers

**1.** Outer body
**1.1** Lower base
**1.2** Upper base
**2.** Inner body
**21.** Lower base
**22.** Upper base
**3.** Fan cover
**4.** Air outlet
**5.** Air inlet
**6.** Fan
**7.** Resistance
**8.** Cooking basket
**9.** Side rack
**10.** Air guiding holes
**11.** Control panel
**12.** Heated air
**13.** Opening
**14.** Opening

### Description of the Invention

The invention relates to a domestic oven with an air frying accessory, which enables the electric oven to gain the function of an air-frying device, with a heater unit and apparatus placed in addition to the fan on the back panel of domestic electric ovens.

The air frying apparatus consists of an outer body (1) and an inner body (2) located within the outer body. The air frying apparatus is placed on the side racks (9) inside the oven, which allow tray placement. A surface of the inner body (2) perpendicular to the side racks (9) has a conical structure suitable for placement on the oven fan. The other surface of the inner body and the surface parallel to the side racks comprise air guiding holes (10) to allow air to enter into the inner body (2). By means of the conical structure of one side of the inner body placed on the oven fan, the air coming from the fan only enters the air frying apparatus. In this way, hot air circulates only in the air fryer, not in the oven. The hot air circulating between the outer body (1) and the inner body (2) enters the inner body (2) through the air guiding holes (10). Inside the inner body (2) there is a cooking basket (8) where food is placed and fried. The upper parts of the inner body (1) and outer body (2) can be opened to place the cooking basket (8) and the food to be cooked into the inner body. The inner body (2) consists of the lower base (21) and the upper base (22), and these bases can be separated from each other to allow food to be placed in the cooking basket (8). The outer body (1) consists of the lower base (1.1) and the upper base (1.2), and by separating these bases from each other, the inner body (2) can be accessed.

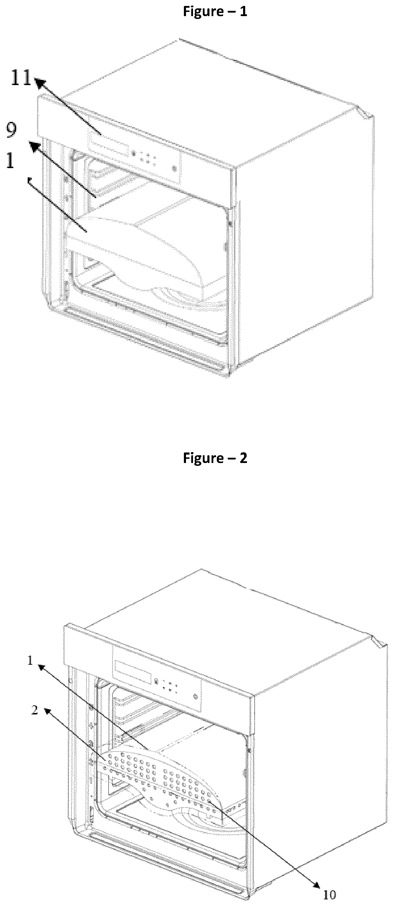

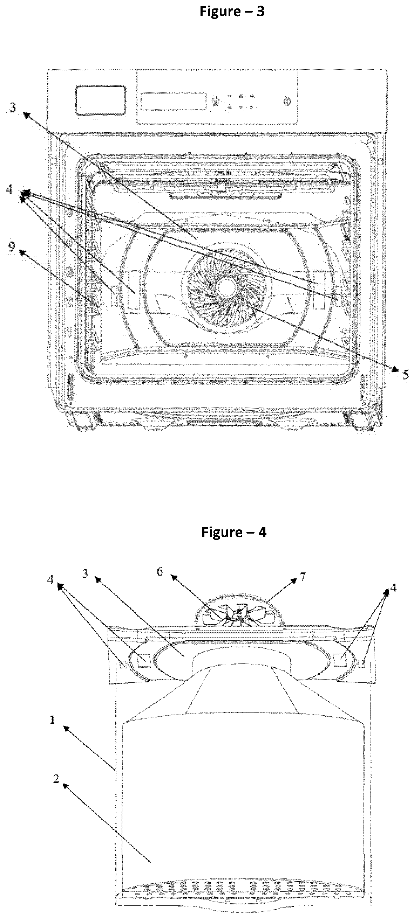

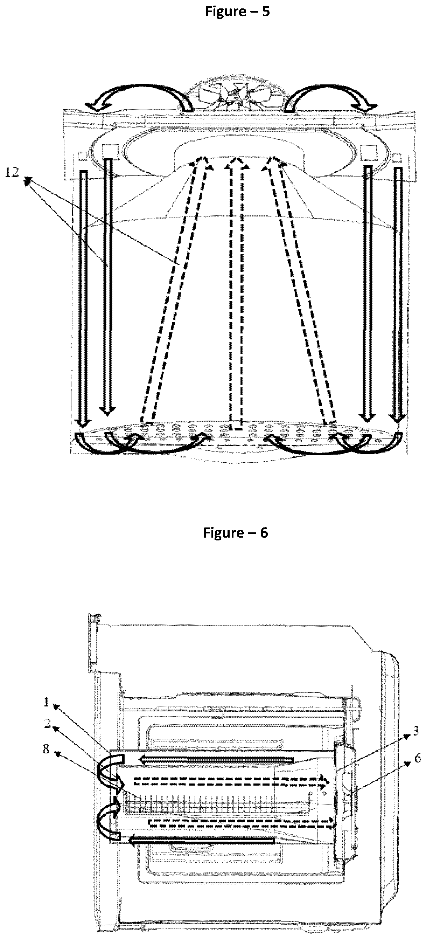

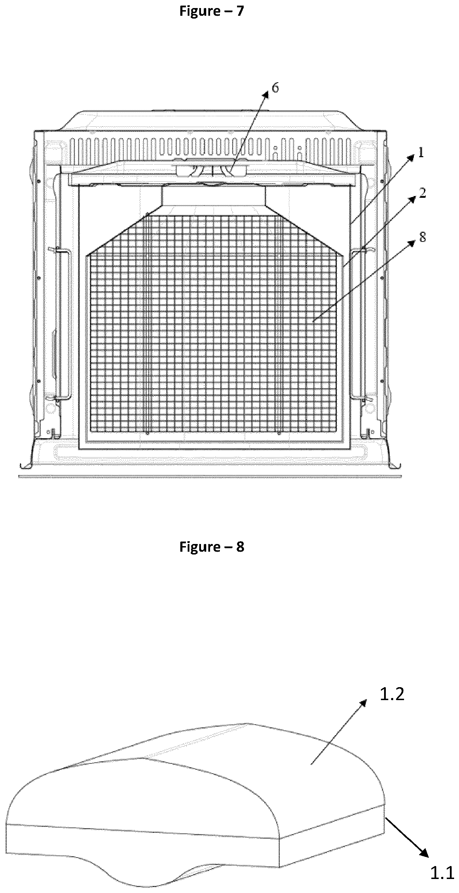

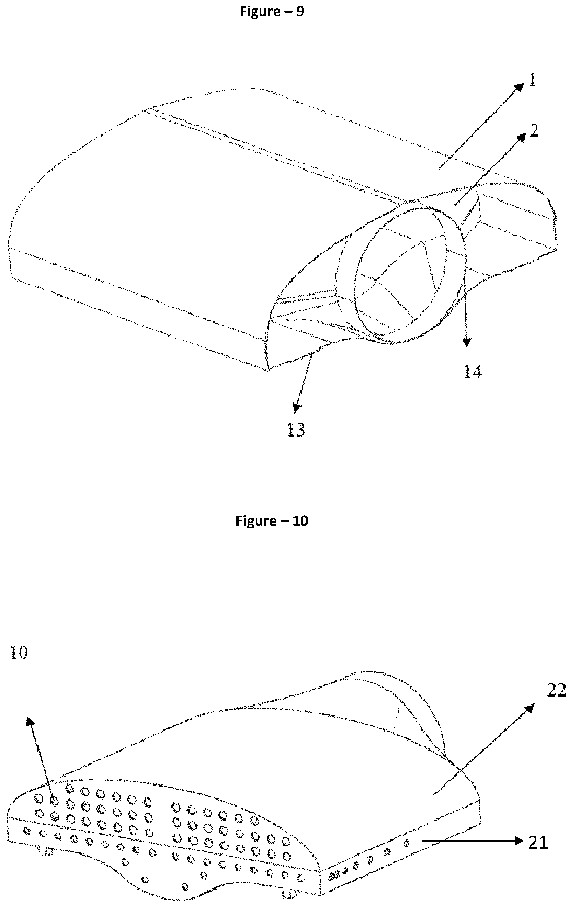

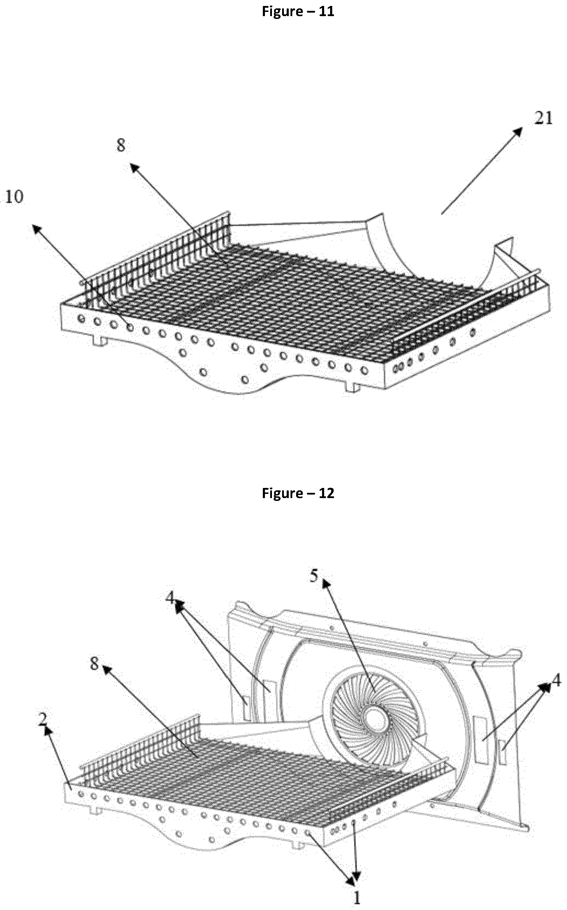

There is a fan (6) and a resistance (7) surrounding the fan behind the fan cover (3) inside the oven. When there is no air frying apparatus in the oven, the fan (6) draws the air in the oven from the air inlet (5), the resistance (7) heats the air and the heated air (12) is blown into the oven from the air outlet (4). If the air frying apparatus is placed in the oven, the heated air (12) enters the apparatus and only the air circulates within the heating apparatus. There is an opening (13) on the surface of the frying apparatus outer body (1) facing the fan (6). There is an opening (14) on the surface of the frying apparatus inner body (2) facing the fan (6). Thus, efficient cooking is carried out in a small volume. The heated air (12) inside the outer body (2) enters through the opening (13) on the outer body (2), as seen in Figure 5, passes through the air guiding holes (10) in the inner body and exits through the opening (14) in the inner body.

When the air frying apparatus is placed in the oven, the heated air (12) heated by the fan resistance (7) exits the air outlet (4) and enters the outer body (1). The air circulating in the outer body (1) enters the inner body (2) through the air guiding holes (10). The heated air (12), which enables the food on the basket (8) located in the inner body to be fried with air, is absorbed by the fan (6) and reaches the fan (6) by passing through the air inlet (5).

There is an air frying function on the control panel (11), where activities such as temperature and time adjustments are made on the oven. After the air frying apparatus is placed in the oven, the air frying function is selected on the control panel (11) and the frying process is started. When the air frying function is selected, only the fan (6) and the resistance (7) surrounding the fan operate in the oven. Thus, the heated air (12) heated by the resistance (7) surrounding the fan is circulated in the air frying apparatus and the frying process is carried out.

## Claims

1. A domestic oven with an air frying apparatus, which enables the domestic electric oven to gain air frying apparatus function, comprising:
- at least one air frying apparatus that has at least one cooking basket (8) in which food is placed and fried, has a conical structure so that a vertical surface of the racks (9) is placed on the fan cover (3) so that the air coming from the fan (6) only enters the air frying apparatus, and has, on the other surface and side surfaces perpendicular to the side racks (9), air guiding holes (10) so that the hot air circulating inside the outer body (1) can enter the inner body (2) and at least one opening (14) that allows the hot air passing through the air guiding holes (10) to come out, consists of the lower base (21) and the upper base (22), and comprises at least one inner body (2) that allows these bases to be separated from each other and to place food in the cooking basket (8), also consists of the lower base (1.1) and the upper base (1.2) placed on the side racks (9) that enable tray placement in the oven and allows access to the inner body (2) by separating these bases from each other, and at least one outer body (1) having at least one opening (13) on the surface facing the fan (6) that allows the hot air coming from the fan (6) to enter, and
- at least one oven that has at least one resistance (7) that heats the drawn air, at least one fan (6) that draws the air inside the oven from the air inlet (5) on the fan cover (3) and blows the heated air (12) into the oven from the air outlet (4) on the fan cover (3), and at least one control panel (11) that ensures that only the fan (6) and the resistance (7) surrounding the fan operate in the oven when the air frying function is selected.
